Europäisches Patentamt

European Patent Office

Office européen des brevets

(19)

(11) Veröffentlichungsnummer : **0 086 873**
**B1**

(12) # EUROPÄISCHE PATENTSCHRIFT

(45) Veröffentlichungstag der Patentschrift :
03.12.86

(51) Int. Cl.⁴ : **E 06 B** 3/66, G 02 F 1/17,
G 02 F 1/13

(21) Anmeldenummer : 82109530.4

(22) Anmeldetag : 15.10.82

(54) **Fenster- oder Türscheibe mit einer Verdunklungsvorrichtung.**

(30) Priorität : 28.10.81 DE 3142717
12.02.82 DE 3205056

(43) Veröffentlichungstag der Anmeldung :
31.08.83 Patentblatt 83/35

(45) Bekanntmachung des Hinweises auf die Patenterteilung : 03.12.86 Patentblatt 86/49

(84) Benannte Vertragsstaaten :
AT BE CH FR GB IT LI LU NL SE

(56) Entgegenhaltungen :
EP-A- 0 012 814
EP-A- 0 028 147
DE-A- 2 125 337
DE-A- 2 242 389
DE-A- 2 629 855
DE-A- 2 643 678
DE-B- 2 155 951
FR-A- 2 147 217
FR-A- 2 373 808
FR-A- 2 399 680
FR-A- 2 502 351
US-A- 4 268 126
APPLIED PHYSICS LETTERS, vol. 35, no. 7, Oktober 1979, NEW YORK (US). C. E. RICE: "A comparison of the behaviors of tungsten trioxide and anodic iridium oxide film electrochronics in nonagueous acidic medium", Seiten 563-565
JOURNAL OF THE ELECTROCHEMICAL SOCIETY, vol. 12, no. 2, Februar 1980, PRINCETON (US). S. GOTTESFELD: "The anodic rhodium oxide film; a twocolor electrochromic system", Seite 272-277
Die Akte enthält technische Angaben, die nach dem Eingang der Anmeldung eingereicht wurden und die nicht in dieser Patentschrift enthalten sind.

(73) Patentinhaber : SCHÜCO Heinz Schürmann GmbH & Co.
Karolinenstrasse 1-15
D-4800 Bielefeld 1 (DE)

(72) Erfinder : Tönsmann, Armin
Dingerdisser Heide 73
D-4800 Bielefeld 18 (DE)

(74) Vertreter : Stracke, Alexander, Dipl.-Ing. et al
Patentanwälte Dipl.-Ing. Loesenbeck Dipl.-Ing.
Stracke Jöllenbecker Strasse 164 Postfach 5605
D-4800 Bielefeld 1 (DE)

## Beschreibung

Die Erfindung bezieht sich auf ein Fenster oder eine Tür mit einer Isolierverglasung aus mindestens zwei im Abstand voneinander angeordneten Glasscheiben und mit einer als Verdunklungsvorrichtung dazwischen angeordneten, sich über die Scheibe erstreckenden, elektrooptischen Zelle, die in Abstand voneinander angeordnete, durchsichtige, an eine elektrische Spannung legbare Elektrodenschichten aufweist.

Es ist ein Fenster oder eine Tür dieser Art bekannt (US-A-4 268 126), bei dem bzw. bei der die elektrooptische Zelle an der Außenseite durch die Außenscheibe der Isolierverglasung und an der Innenseite durch eine Glasscheibe begrenzt wird. Durch die Verwendung einer Glasscheibe als Innenbegrenzung der Zelle vergrößert sich die Bautiefe der Isolierverglasung nicht unerheblich, da die Bautiefe des Raumes zur Aufnahme von Luft, von Edelgasen o. dgl. nicht verkleinert werden darf, damit die angestrebte Wärmedämmung auch erreicht wird. Die durch Elektrodenschichten an zwei gegenüberliegenden Seiten begrenzte Innenkammer der elektrooptischen Zelle ist mit Flüssigkristallen gefüllt. Die Flüssigkristalle erfordern eine besondere umfängliche Abdichtung der Innenkammer. Versuche haben gezeigt, daß mit einer derartigen elektrooptischen Zelle keine gleichmäßig über die gesamte Fenster- oder Türfläche arbeitende Verdunklungsvorrichtung zu erzielen ist. Auch bei kleinen Fenster- oder Türflächen wirken sich die durch die Flüssigkeitssäule erzeugten unterschiedlichen Druckhöhen nachteilig aus.

Es ist ferner eine mit einer elektrooptischen Zelle ausgerüstete, durchsichtige Mehrschichtplatte bekannt (EP-A-28147), die als Fensterverbundscheibe benutzt werden kann und bei der die Zelle einen festen Elektrolyten aufweist. Auch bei dieser Ausführung wird die Zelle an der Innen- und an der Außenseite durch eine Glasscheibe begrenzt.

Der Erfindung liegt die Aufgabe zugrunde, ein Fenster oder eine Tür der eingangs genannten Art so zu gestalten, daß die Verdunklungsvorrichtung durch eine elektrooptische Zelle mit geringer Gesamtdicke gebildet wird.

Diese Aufgabe wird nach der Erfindung dadurch gelöst, daß zwischen den Elektrodenschichten ein Ionen aufweisender fester Elektrolyt vorgesehen ist, daß mindestens eine Elektrodenschicht an der dem Elektrolyten zugewandten Seite mit einer elektrochromen Schicht ausgerüstet ist und daß die Zelle in der Weise im Innenraum der Isolierverglasung angeordnet ist, daß eine der Glasscheiben die Trägerscheibe für die Zelle bildet und die Begrenzung der Zelle zum Zwischenraum der Isolierverglasung hin nur durch die auf dieser Seite der Zelle befindliche Elektrodenschicht gebildet ist.

Die Elektrodenschicht kann einzelne, elektrisch voneinander getrennte Rasterfelder aufweisen. Diese können einzeln zu- oder abgeschaltet werden. Mit der Rasterung ist es möglich, Teilbereiche der Scheibe abzudunkeln, wie es die gerade einfallenden Sonnenstrahlen erfordern, oder aber auch Teile der Scheibe durch geringere Strombeaufschlagung gestuft abzudunkeln.

Bei einer Ausführungsform der Erfindung beträgt die Gesamtdicke der Zelle von der inneren Oberfläche der Trägerscheibe ab gerechnet 4 bis 6 μm. Aufgrund dieser geringen Gesamtdicke der elektrooptischen Zelle kann sie im Innenraum einer Isolierverglasung untergebracht werden, ohne daß die Grundkonstruktion der Isolierverglasung beeinflußt wird oder wesentlich der Verdunklungsvorrichtung angepaßt werden muß.

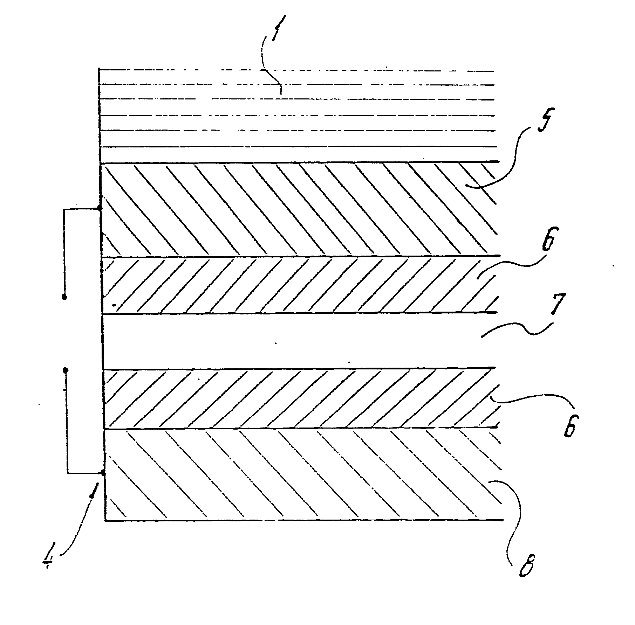

Ein Ausführungsbeispiel der Erfindung ist in der Zeichnung dargestellt.

Die Glasscheibe 1, die eine Außenscheibe einer Isolierverglasung aus mindestens zwei im Abstand voneinander angeordneten Glasscheiben bildet, wird als Trägerscheibe für eine elektrooptische Zelle 4 verwendet. Die elektrooptische Zelle 4 ist an der Innenseite der Glasscheibe 1 befestigt und weist Elektrodenschichten 5 und 8 auf. An diese Elektrodenschichten kann über elektrische Anschlüsse eine elektrische Spannung angelegt werden. An beiden Elektrodenschichten ist eine elektrochrome Schicht 6 festgelegt. Zwischen den elektrochromen Schichten 6 ist ein Ionen aufweisender fester Elektrolyt 7 angeordnet. Die Gesamtdicke der Zelle 4 beträgt 4 bis 6 μm. Die Elektrodenschicht 8 bildet die Begrenzung der Zelle 4 zum Zwischenraum der Isolierverglasung hin.

Die Elektrodenschichten sind durchsichtig. Die Elektrodenschicht 8 kann auch als Rastersystem ausgebildet sein.

Die elektrochromen Schichten können aus Wolframoxid ($WO_3$), Molybdänoxid ($MoO_3$), Nioboxid ($Nb_2O_5$), Vanadiumoxid ($V_2O_5$), Iridiumoxid ($IrO_x(OH)_{n-x}$) oder Rhodiumoxid ($RhO_2$) bestehen.

Die elektrochrome Reaktion in der elektrochromen Schicht, nämlich die Färbung der Schicht durch Einlagerung von Ionen des Elektrolyten, wird durch eine Wegnahme der elektrischen Spannung rückgängig gemacht, so daß die Ionen in den Elektrolyten zurückwandern und die elektrochrome Schicht wieder durchsichtig wird.

## Patentansprüche

1. Fenster oder Tür mit einer Isolierverglasung aus mindestens zwei im Abstand voneinander angeordneten Glasscheiben und mit einer als Verdunklungsvorrichtung dazwischen angeordneten, sich über die Scheibe erstreckenden elektrooptischen Zelle (4), die in Abstand voneinander angeordnete, durchsichtige, an eine elektrische Spannung legbare Elektrodenschichten (5, 8) aufweist, dadurch gekennzeichnet, daß zwischen den Elektrodenschichten (5, 8) ein Ionen aufweisender fester Elektrolyt (7) vorgesehen ist, daß mindestens eine Elektrodenschicht (5) an der dem Elektrolyten (7) zugewandten Seite mit einer elektrochromen Schicht ausgerüstet ist, und daß die Zelle (4) in der Weise im Innenraum der Isolierverglasung angeordnet ist, daß eine der Glasscheiben (1) die Trägerscheibe für die Zelle (4) bildet und die Begrenzung der Zelle zum Zwischenraum der Isolierverglasung hin nur durch die auf dieser Seite der Zelle befindliche Elektrodenschicht (8) gebildet ist.

2. Fenster oder Tür nach Anspruch 1, dadurch gekennzeichnet, daß die Elektrodenschicht (8) einzelne, elektrisch voneinander getrennte Rasterfelder aufweist.

3. Fenster oder Tür nach Anspruch 1 oder 2, dadurch gekennzeichnet, daß die Gesamtdicke der Zelle (4) von der inneren Oberfläche der Trägerscheibe (1) ab gerechnet, 4 bis 6 μm beträgt.

## Claims

1. A window or door with insulating glazing comprising at least two spaced-apart panes of glass and an electro-optical cell (4) which is arranged therebetween as a darkening means and which extends over the pane and which has spaced-apart transparent electrode layers (5, 8) which can be connected to an electrical voltage characterised in that provided between the electrode layers (5, 8) is an ion-bearing solid electrolyte (7), that at least one electrode layer (5) is provided with an electrochrome layer at the side towards the electrolyte (7) and that the cell (4) is arranged in the interior of the insulating glazing in such a way that one of the panes of glass (1) forms the carrier plate for the cell (4) and the means delimiting the cell towards the intermediate space of the glazing is formed only by the electrode layer (8) disposed on that side of the cell.

2. A window or door according to claim 1 characterised in that the electrode layer (8) has individual pattern areas which are electrically separated from each other.

3. A window or door according to claim 1 or claim 2 characterised in that the overall thickness of the cell (4), as considered from the inward surface of the carrier plate (1), is from 4 to 6 μm.

## Revendications

1. Fenêtre ou porte comportant un vitrage isolant se composant d'au moins deux plaques de verres disposées à une certaine distance l'une de l'autre et une cellule électro-optique (4), recouvrant les plaques et disposée entre elles en tant que dispositif d'assombrissement, qui présente des couches d'électrodes (5, 8) séparées les unes des autres, transparentes, branchables sur une alimentation électrique, caractérisée en ce qu'il est prévu, entre les couches d'électrodes (5, 8), un électrolyte solide (7) comportant des ions, en ce que au moins une couche d'électrodes (5) est équipée, sur la face tournée vers l'électrolyte (7), d'une couche d'électrochrome et en ce que la cellule (4) est disposée dans l'espace intérieur du vitrage isolant de telle sorte que l'une des plaques de verre (1) forme la plaque-support de la cellule (4) et que la délimitation de la cellule pour l'espace intermédiaire du vitrage isolant n'est formé que par la couche d'électrodes (8) se trouvant sur ce côté de la cellule.

2. Fenêtre ou porte selon la revendication 1, caractérisée en ce que la couche d'électrodes (8) présente des champs de réseau élémentaires séparés électriquement les uns des autres.

3. Fenêtre ou porte selon la revendication 1 ou la revendication 2, caractérisée en ce que l'épaisseur globale de la cellule (4), calculée à partir de la surface intérieure de la plaque-support (1), se situe entre 4 et 6 μm.